# EUROPEAN PATENT SPECIFICATION

(11) **EP 0 362 112 B1**
(45) Date of publication and mention of the grant of the patent: **03.02.1993**
(21) Application number: 89500092.5
(22) Date of filing: 21.09.1989
(51) Int. Cl.: F25C 1/24

(54) **A mould container for making ice cubes**
Zellenbehälter zur Eiswürfelerzeugung
Conteneur à moules pour la fabrication de glaçons

(30) Priority: 27.09.1988 ES 8802824
(43) Date of publication of application: 04.04.1990
(73) Proprietor: DEBARCELONA DISSENYS, S.A., E-08011 Barcelona (ES)
(72) Inventor: Teixido Vidal, José, E-08015 Barcelona (ES)
(74) Representative: Ponti Grau, Ignasi

(56) References cited:
- GB-A- 367 179
- GB-A- 536 895
- US-A- 1 773 603
- US-A- 2 961 849
- US-A- 3 129 568
- BOLETIN OFICIAL DE LA PROPIEDAD INDUSTRIAL, vol. 103, no. 2426, 1st May 1988, page 2110, Madrid, ES; & ES-U-1 001 617

## Description

The present invention relates to a mould container allowing a dual purpose of making ice cubes and, if desired, to contain a refrigerating substance or a beverage or an eatable substance.

A mould receptacle for the obtention of small ice blocks is known from patent specification ES-U-1 001 617. The device described in this document has a plurality of small block moulding cavities opening to a central cavity in the inside of which a removable plunger-like body having a closing plug for the moulding container, can be inserted such that it displaces, while it penetrates the said cavity, the water previously poured into the receptacle, which is thus distributed within the block moulding cavities, and when it has been fitted within the receptacle, it closes the moulding cavities and the plug closes the said receptacle.

Practice has shown that it is possible to improve the described mould-receptacle as regards the configuration of the plunger, as it will be described hereafter.

According to the present invention the mould container for making ice cubes is characterized in that the central inner cavity of the mould container has a cross section that progressively narrows starting from its end corresponding to the cavity access opening or mouth, and the hollow plug has an outer surface which is complementary of the central inner cavity, such that it thoroughly fits in said cavity when it has been fully inserted within it.

In a more specific embodiment of the invention the hollow plunger shaped body is made thoroughly closed and fluid impervious in its manufacture and contains in its inside a freezer liquid. In an alternative embodiment, the hollow plunger sbaped member is endowed with an access opening or mouth which is closed by a removable plug having means for ensuring a tight closure, such that it is possible to fill the inside of the plunger with a desired substance, or to empty it as required. Typical examples of such substances are a beverage or an ice-cream.

For a better understanding of the invention, reference will be made to the enclosed drawings which represent, only by way of an example, a practical case of embodiment of the mould-container. In the said drawings:
Figure 1 is a view in longitudinal section of the mould container in closed and full condition;
Figure 2 is a detailed longitudinal section of the mould-container at the moment of inserting the plunger in the inner cavity;
Figure 3 is a longitudinal section of the disassembled mould-container,
and figure 4 is a cross section of the mould-container with the plunger in its inside.

The mould-container, generally referred to as 1 in the drawings, is made of a flexible plastic or the like material body having a central longitudinal cavity 3 and a plurality of moulded cavities 2 constituting the moulds for the ice cubes. Their number, shape and distribution are optional.

The central cavity 3 has a bottom end 3a and an access opening 6 opposite to this end. The lateral surface of this cavity has a cross section which diminishes from the opening 6 to the bottom 3a, for example a frustoconical surface.

The moulds 2 open to the central cavity 3 in any desired distribution, for example, as shown in the drawing, forming longitudinal and circumferential rows.

A second member of the device is a hollow plunger 4 the outer surface of which is made complementary of the inner surface of the longitudinal central cavity 3, such that it cab be inserted in the said cavity under longitudinal sliding, until the inner end 4a of the hollow plunger 4 abuts onto the bottom 3a of the said cavity 3. The opposite end of the hollow plunger 4 is formed with a plug 5 of any desired shape and intended to fit with a complementary portion of the opening 6 of the container 1 in order to close the inside of the said container.

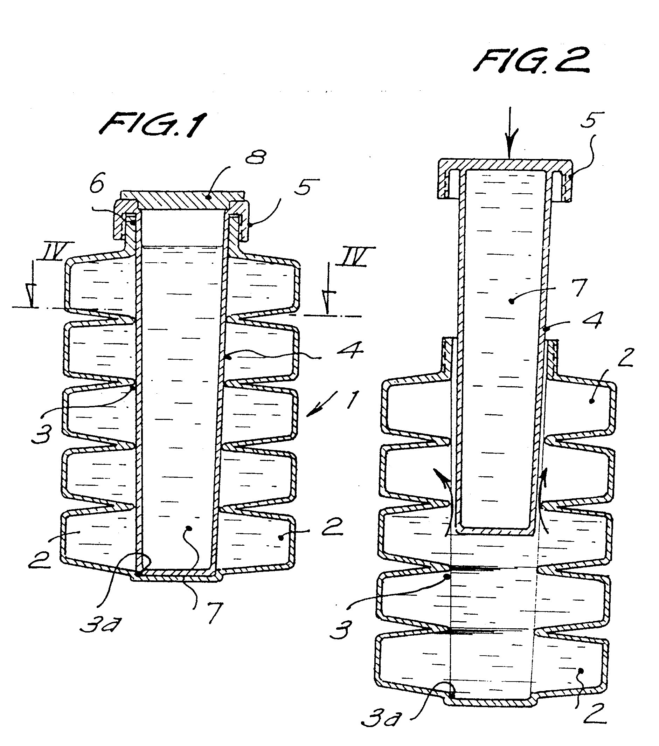

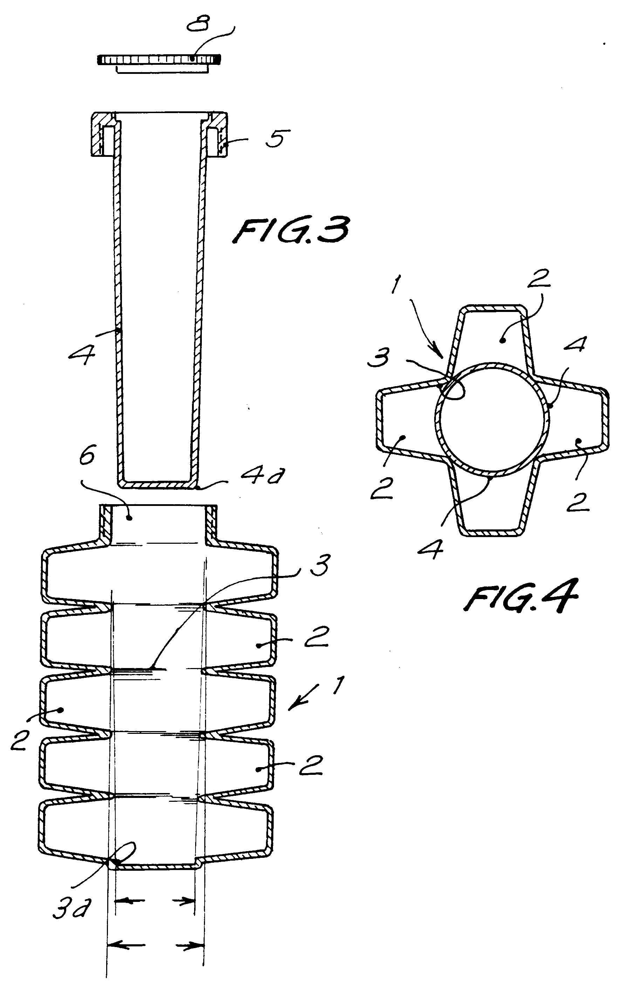

The hollow plunger 4 forms an internal chamber that can be filled with a liquid 7, either a refrigerant liquid or a beverage. In the first case it is advisable that the plunger is closed in impervious manner in its manufacture (Fig. 2) to prevent from inadvertently pouring its contents. In the case in which the hollow body or plunger 4 is intended to contain a beverage or another drinkable product, the plunger will be fitted with a tightly closing plug 8 which can be removed at will (Fig. 1 and 3).

From the above description and looking at the drawings it resorts that, once the water from which the ice cubes are to be made has been poured into the mould container 1, the plunger 4 is inserted into its inner cavity 3 such that it pushes the excess water to the space formed between the inner surface of the plunger 4 and the inner face of the cavity 3 into which the mould 2 open. Water fills all of the moulds or cavities 2 and the excess water is expelled through interstices existing between the upper portion of the plunger and the neck or mouth 6 of the receptacle 1.

In this manner, it is not compulsory to mark on the outside of the mould-receptacle the water level which is necessary to fill the moulds 2, since the excess water will be automatically ejected when inserting the plunger 4 in the cavity 3.

Once the mouth 6 of the mould-receptacle 1 has been closed by the plug 5 incorporated to the plunger 4, the water will be housed only within the moulds 2, from which it cannot issue, because this is prevented by the plunger 4 proper. Thanks to the tapered shape of the chamber 3 and the plunger 4, it is possible to dispense with the passages and communications between the cavities 2, which in the embodiment as specified in ES-U-1 001 617 are intended to facilitate the flow of excess water at the instant of inserting the plunger in the central cavity.

On the other band, the feasibility of filling the inside of the plunger 4 with a liquid, either a freezing liquid or a beverage, confers to the mould-receptacle new features as regards the previous embodiments. In fact, if the plunger 4 is filled with a freezing liquid, the time after which the formed ice blocks become unfrozen when the mould-receptacle is out of the freezer, is belated. In the case of using the plunger 4 to contain a beverage or other eatable product, for example an ice-cream , the mould-receptacle can be used to refrigerate this product or beverage, which will also be preserved cold when kept for a time within the mould-receptacle without removing the ice blocks from its inside.

## Claims

1. A mould container for making ice cubes, of the kind comprising a plurality of ice cube moulding cavities (2) opening to a central cavity (3) in the inside of which a removable plunger-like body (4) having a closing plug (5) for the moulding container, can be inserted such that it displaces, while it penetrates the said cavity, the water previously poured into the container, which is thus distributed within the ice cube moulding cavities (2), and when it has been fitted within the receptacle, it closes the moulding cavities (2) and the plug (5) closes the said container (1), the plunger shaped body (4) being made hollow and thoroughly isolated from the inside of the mould-container, thus forming a chamber which can be used to contain a different liquid or substance (7), characterized in that the central inner cavity (3) of the mould container (1) has a cross section that progressively narrows starting from its end corresponding to the cavity access opening or mouth (6), and the plunger shaped body (4) has an outer surface which is complementary of the central inner cavity (3), such that it thoroughly fits in said cavity when it has been fully inserted within it.

2. A mould container according to claim 1, characterized in that the hollow plunger shaped body (4) is made thoroughly closed and fluid impervious in its manufacture and contains in its inside a freezer liquid (7).

3. A mould container according to claim 1, characterized in that the hollow plunger shaped body (4) is endowed with an access opening or mouth which is closed by a removable plug (8) having means for ensuring a tight closure.

## Patentansprüche

1. Formbehälter zum Herstellen von Eiswürfeln, der aus einer Vielzahl von Eiswürfel formenden Hohlräumen (2) besteht, die zu einem zentralen Hohlraum (3) hin offen sind, indessen Inneren ein lösbarer tauchkolbenförmiger Körper (4) mit einem Verschlußpfropfen (5) für den Formbehälter so eingesetzt werden kann, daß er, während er in den Hohlraum eindringt, das zuvor in den Behälter gegossene Wasser verdrängt, das auf diese Weise innerhalb der die Eiswürfel formenden Hohlräume (2) verteilt wird, und daß er, wenn er innerhalb des Behälters eingesetzt worden ist, die Formhohlräume (2) schließt und der Pfropfen (5) den Behälter (1) schließt, wobei der tauchkolbenförmige Körper (4) hohl und durchgehend getrennt vom Inneren des Formbehälters ausgebildet ist, wodurch eine Kammer gebildet wird, die dazu verwendet werden kann, eine andere Flüssigkeit oder Substanz (7) zu enthalten, **dadurch gekennzeichnet**, daß der zentrale Innenhohlraum (3) des Formbehälters (1) einen Querschnitt aufweist, der, beginnend von seinem Ende entsprechend der Zugangsöffnung oder -mündung (6) des Hohlraumes fortlaufend enger wird, und daß der tauchkolbenförmige Körper (4) eine Außenfläche aufweist, die zum zentralen Innenhohlraum (3) komplementär ist, so daß er durchgehend in den Hohlraum paßt, wenn er innerhalb diesen vollständig eingesetzt worden ist.

2. Formbehälter nach Anspruch 1, **dadurch gekennzeichnet**, daß der hohle tauchkolbenförmige Körper (4) durchgehend geschlossen und flüssigkeitsundurchlässig hergestellt ausgebildet ist und in seinem Inneren eine Gefrierflüssigkeit (7) enthält.

3. Formbehälter nach Anspruch 1, **dadurch gekennzeichnet**, daß der hohle tauchkolbenförmige Körper (4) mit einer Zugangsöffnung oder -mündung versehen ist, die durch einen lösbaren Pfropfen (8) mit Mitteln zum Sicherstellen eines dichten Verschlusses ausgestaltet ist.

## Revendications

1. Récipient de moulage destiné à former des cubes de glace, du type qui comprend plusieurs cavités (2) de moulage de cubes de glace débouchant dans une cavité centrale (3) à l'intérieur de laquelle peut pénétrer un corps amovible (4) en forme de plongeur ayant un bouchon (5) de fermeture du récipient de moulage, de manière que le plongeur déplace l'eau préalablement versée dans le récipient lorsqu'il pénètre dans la cavité, l'eau étant répartie dans les cavités (2) de moulage de cubes de glace, et, lorsque le plongeur s'est logé dans le réceptacle, il ferme les cavités de moulage (2) et le bouchon (5) ferme le récipient (1), le corps (4) en forme de plongeur étant creux et bien isolé de l'intérieur du récipient de moulage et formant ainsi une chambre qui peut être utilisée pour contenir une substance ou un liquide différent (7), caractérisé en ce que la cavité centrale interne (3) du récipient de moulage (1) a une section qui diminue progressivement depuis son extrémité qui correspond à l'embouchure ou ouverture d'accès (6) de la cavité, et le corps (4) en forme de plongeur a une surface externe qui est complémentaire de la cavité centrale interne (3), si bien qu'il s'ajuste intimement dans la cavité lorsqu'il a été totalement introduit dans celle-ci.

2. Récipient de moulage selon la revendication 1, caractérisé en ce que le corps creux (4) en forme de plongeur est imperméable aux fluides et est fermé soigneusement pendant sa fabrication, et il contient un liquide de réfrigération (7).

3. Récipient de moulage selon la revendication 1, caractérisé en ce que le corps creux (4) en forme de plongeur a une embouchure ou ouverture d'accès qui est fermée par un bouchon amovible (8) comprenant un dispositif assurant une fermeture étanche.
